# EUROPEAN PATENT APPLICATION

(11) **EP 4 425 184 A1**
(43) Date of publication of application: **04.09.2024**
(21) Application number: 22886680.2
(22) Date of filing: 11.10.2022
(51) Int. Cl.: G01N 35/00, G01N 35/02, G01N 35/04, G01N 35/10, G01N 1/10, G01N 30/04

(54) **AUTOMATIC ANALYSIS DEVICE CONTROL METHOD AND AUTOMATIC ANALYSIS DEVICE**

(30) Priority: 25.10.2021 JP 2021173792
(71) Applicant: HITACHI HIGH-TECH CORPORATION, Tokyo 105-6409 (JP)
(72) Inventor: ITO Mayuko, Tokyo 105-6409 (JP); MATSUOKA Shinya, Tokyo 105-6409 (JP); EBIHARA Daisuke, Tokyo 105-6409 (JP)
(74) Representative: Strehl Schübel-Hopf & Partner
(86) International application number: PCT/JP2022/037885
(87) International publication number: WO 2023/074351

(57) **Abstract**

To relax restrictions, which are associated with the access of a transfer mechanism and a nozzle to the same installation location, on an operation time chart of an automatic analyzer. In a control method of an automatic analyzer according to the present disclosure: the automatic analyzer is configured so that a transport mechanism of a container and a nozzle may not be simultaneously accessible to an installation part of the container; and the transport mechanism installs a second container to the installation part before the nozzle discharges a liquid to the second container installed at the installation part after the nozzle aspirates the liquid from a first container installed at the installation part.

## Description

### Technical Field

The present disclosure relates to an automatic analyzer.

### Background Art

An automatic analyzer for a liquid sample analyzes a specific component contained in a specimen such as a blood or urine, for example. The automatic analyzer aspirates a liquid such as a sample or a reagent from a container by a nozzle, or discharges the sample or the reagent to the container. The automatic analyzer further includes a transport mechanism for moving the container to an installation place.

Patent literature 1 discloses a technique for transporting a liquid container mounted on a rack to a nozzle (see paragraph 0006). Patent literature 2 discloses a technique for discharging a specimen or a reagent to reaction vessels arranged on a reaction disc (see paragraph 0038).

### Citation List

### Patent Literature

Patent Literature 1: Japanese Unexamined Patent Application Publication No. 2011-102735
Patent Literature 2: Japanese Unexamined Patent Application Publication No. 2014-206381

### Summary of Invention

### Technical Problem

In the prior art disclosed in patent literatures 1 and 2, the transport mechanism moves the container to the installation place, the nozzle also moves to the installation place and aspirates a liquid from the container or discharges the liquid to the container. That is, it is necessary to allow both the transport mechanism and the nozzle to get access to a space where the container is installed.

Depending on shapes and sizes of the transport mechanism and the nozzle, there may be a case where only either one of the transport mechanism and the nozzle is accessible to the installation place for the container. For example, a case where the installation place is fixed, and unless either one of the transport mechanism and the nozzle is evacuated from the installation place, the other is not accessible to the installation place, corresponds to such a case. With such a configuration, an operation of the transport mechanism or the nozzle is restricted and hence, an operation time chart of the automatic analyzer is also restricted due to such a restriction.

The present disclosure is made in view of the above-mentioned drawback, and it is an object of the present invention to alleviate the restriction imposed on an operation time chart of an automatic analyzer brought about by allowing a transport mechanism and a nozzle to be accessible to the same installation place.

### Solution to Problem

The present disclosure provides a control method for controlling an automatic analyzer, in which the automatic analyzer is configured not to allow a transport mechanism of a container and a nozzle to be simultaneously accessible to an installation part of the container, and after the nozzle aspirates a liquid from a first container installed at the installation part and before the nozzle discharges the liquid to a second container installed at the installation part, the transport mechanism installs the second container in the installation part.

### Advantageous Effects of Invention

According to the control method for controlling an automatic analyzer of the present disclosure, it is possible to alleviate the restriction imposed on an operation time chart of the automatic analyzer brought about by allowing the transport mechanism and the nozzle to access the same installation place. Other technical features, other advantageous effects, other configurations of the present disclosure will become apparent by referencing the following detailed description.

### Brief Description of the Drawings

Fig. 1 is a view schematically showing an overall configuration of an automatic analyzer 100 according to Embodiment 1.
Fig. 2 is a view explaining conventional operations of a transport mechanism and a nozzle.
Fig. 3 is a view explaining operations of a transport mechanism 132 and a nozzle 133 according to Embodiment 1.
Fig. 4 is a time chart of conventional operations explained in Fig. 2.
Fig. 5 is a time chart of operations according to Embodiment 1 explained in Fig. 3.
Fig. 6 is an overall configuration diagram of an automatic analyzer 100 according to Embodiment 2.
Fig. 7A is an overall configuration diagram of an automatic analyzer 100 according to Embodiment 3.
Fig. 7B is another configuration diagram of an automatic analyzer 100 according to Embodiment 3.

### Description of Embodiments

### Embodiment 1: Device Configuration

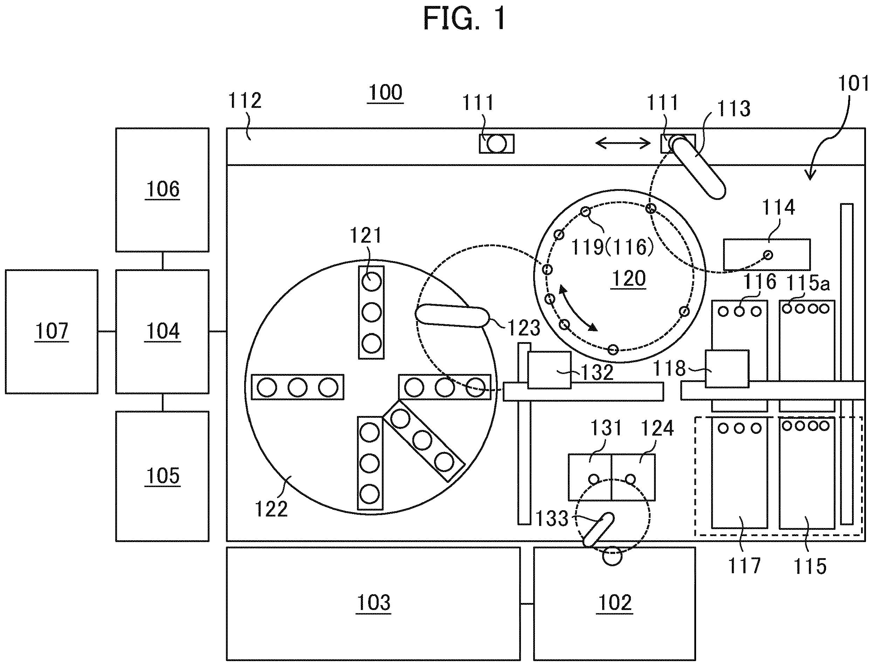

Fig. 1 is a view schematically showing an overall configuration of an automatic analyzer 100 according to Embodiment 1 of the present disclosure. In Fig. 1, the automatic analyzer 100 includes a pretreatment part 101 that performs pretreatment of a sample; a separation part 102 that separates a component in the sample; an analysis part 103 that analyzes the separated component; a control unit 104 that controls an operation of the entirety of the automatic analyzer 100; an input part 105 for allowing a user to input information to the device; a display part 106 for displaying information to the user; and a storage part 107 such as storage medium that stores various information relating to a control of the automatic analyzer 100.

The control unit 104, the input part 105, the display part 106 and the storage part 107 constitute a control device for controlling an operation of the entirety of the automatic analyzer 100.

The pretreatment part 101 includes: a transport mechanism 112 that transports a sample container 111 in which a sample that is an object to be analyzed is contained to a sample dispensing position; a reaction vessel disc 120 that is capable of holding solutions in the reaction vessels 116 at a fixed temperature by mounting the reaction vessels 116 in a plurality of opening portions 119; a reagent disc 122 that holds a plurality of reagent vessels 121 in which reagents are contained; a sample dispensing mechanism 113 that dispenses a sample to the reaction vessels 116 contained in the opening portions 119 of the reaction vessel disc 120 from the sample container 111 transported to a sample dispensing position.

The pretreatment part 101 further includes: a reagent dispensing mechanism 123 that dispenses a reagent to the reaction vessels 116 of the reaction vessel disc 120 from the reagent vessels 121; a dispensing chip mounting rack 115 on which disposable dispensing chips 115a that are mounted on nozzles of the sample dispensing mechanism 113 and are not yet used are mounted; and a dispensing chip detachably mounting part 114 that removes the used dispensing chips 115a from the nozzles of the sample dispensing mechanism 113 and discards the used dispensing chips 115a and mounts non-used dispensing chips 115a to the nozzles.

The pretreatment part 101 further includes: a reaction vessels mounting rack 117 on which non-used reaction vessels 116 are mounted; and a transport mechanism 118 that transports non-used dispensing chips 115a from the dispensing chip mounting rack 115 to the dispensing chip detachably mounting part 114, transports used reaction vessels 116 from the opening portions 119 of the reaction vessel disc 120 to a discard part (not illustrated in the drawing) and transports non-used reaction vessels 116 from the reaction vessel mounting rack 117 to the opening portions 119 of the reaction vessel disc 120.

The pretreatment part 101 further includes: a magnetic separation mechanism 124 that separates magnetic beads in a solution contained in the reaction vessel 116 by a magnetic force of a magnet; an evaporation concentration mechanism 131 that evaporates and concentrates a component to be analyzed in the solution in the reaction vessel 116; a transport mechanism 132 that transports the reaction vessel 116 between the reaction vessel disc 120, the magnetic separation mechanism 124 and the evaporation concentration mechanism 131.

The pretreatment part 101 further includes a separation-part-use dispensing mechanism 133 that dispenses a solution in the reaction vessel 116 after the evaporation and the concentration to the separation part 102. As described later, the separation-part-use dispensing mechanism 133 also plays a role of dispensing a liquid between a container that the magnetic separation mechanism 124 holds and a container that the evaporation concentration mechanism 131 holds.

The reaction vessel disc 120 functions as an incubator that holds a temperature of the reaction vessels 116 disposed in the opening portions 119 at a constant temperature, and incubates the reaction vessels 116 disposed in the opening portions 119 for a fixed time.

The separation part 102 is, for example, a liquid chromatography (LC) and includes a column or the like as a function of separating a component in a reaction solution that is dispensed by the separation-part-use dispensing mechanism 133. The separation part 102 separates a component in a reaction solution dispensed from the reaction vessel 116 by the separation-part-use dispensing mechanism 133, and sequentially introduces the separated component to the analysis part 103.

The analysis part 103 is, for example, a mass spectrometry (MS), and includes an electron multiplier or the like as a function of performing ionization and a mass analysis of a component introduced from the separation part 102. The analysis part 103 ionizes components introduced from the separation part 102 and detects a quantity of ions (that is, a quantity of components), and outputs a detection result to the control unit 104.

The control unit 104 controls operations of the entirety of the automatic analyzer 100 such as an operation of the magnetic separation mechanism 124, an operation of the evaporation concentration mechanism 131, an operation of the separation part 102, and an operation of the analysis part 103. Further, the control unit 104 calculates a concentration value of components in a sample using a detection result (a quantity of ions) from the analysis part 103 and a calibration curve obtained in advance, stores the concentration value in the storage part 107 as an analysis result and, at the same time, displays the analysis result on the display part 106.

### Embodiment 1: Operations of Transport Mechanism and Nozzle

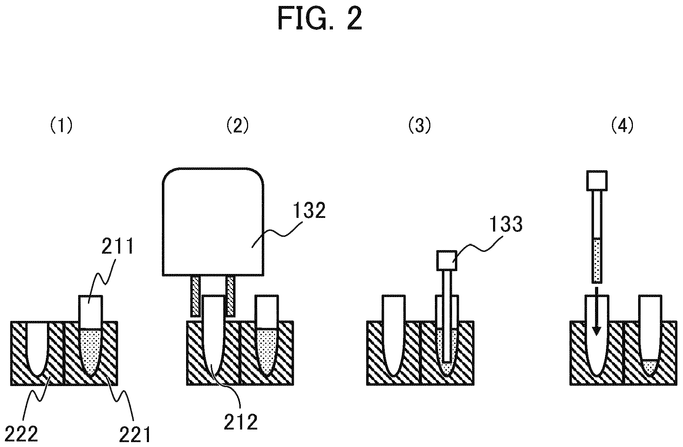

Fig. 2 is a view explaining conventional operations of a transport mechanism and a nozzle. In this Embodiment 1, assume a scene where transport mechanism 132 mounts a container on the magnetic separation mechanism 124 or the evaporation concentration mechanism 131, and a nozzle of the separation-part-use dispensing mechanism 133 (for the sake of convenience, simply referred to as the nozzle 133 hereinafter) gets accesses to the container, and aspirates or discharges a liquid. The transport mechanism 132 and the nozzle 133 are controlled by the control unit 104.

In the example illustrated in Fig. 2, the magnetic separation mechanism 124 includes a first installation part 221 as a portion for installing a container (a hole for receiving the container). In the same manner, the evaporation concentration mechanism 131 includes a second installation part 222 as a portion for installing a container. The transport mechanism 132 accesses these installation parts, and installs the containers at the respective installation parts. In Fig. 2, a state is illustrated where the first container 211 is already installed at the first installation part 221 (Fig. 2 (1)). As the first container 211 and a second container 212 described later, any arbitrary containers are considered. For example, it is considered that the reaction vessel 116 is installed as the first container 211 or the second container 212.

The transport mechanism 132 installs the second container 212 at the second installation part 222 (Fig. 2(2)). The transport mechanism 132 is, for example, configured to hold the second container 212 by clamping, to insert the second container 212 to the second installation part 222 and, thereafter, to release the second container 212. Such a mechanism requires a space size of a certain magnitude. Accordingly, during a period that the transport mechanism 132 accesses the first installation part 221 or the second installation part 222, the nozzle 133 can not get access to the first installation part 221 and the second installation part 222 (when the nozzle 133 intends to get access to the first installation part 221 and the second installation part 222, the transport mechanism 132 and the nozzle 133 collide with each other). Accordingly, during a period that the transport mechanism 132 installs the second container 212 at the second installation part 222, the nozzle 133 is evacuated to a position spaced apart from the first installation part 221 and the second installation part 222.

Transport mechanism 132 is evacuated to the position spaced apart from the first installation part 221 and the second installation part 222. When the transport mechanism 132 is evacuated, the nozzle 133 can get access to the first installation part 221 and the second installation part 222. The nozzle 133 accesses the first container 211 that the first installation part 221 holds (that is, introduces the nozzle 133 into the first container 211). The nozzle 133 aspirates a liquid stored in the first container 211 (Fig. 2 (3)).

The nozzle 133 accesses the second installation part 222 (that is, moves to a position above the second installation part 222). The nozzle 133 accesses the second container 212 that the second installation part 222 holds (that is, introduces the nozzle 133 into the second container 212). The nozzle 133 discharges a liquid aspirated in to the nozzle 133 to the second container 212 (Fig. 2(4)).

As an example of a case where it is necessary to perform the above-mentioned aspirating and discharging operation, a case is exemplified where, to prevent magnet beads used for refining a material to be measured from being introduced into the separation part 102, the first container 211 that stores a liquid containing magnetic beads is installed at the first installation part 221, and only a supernatant liquid is moved to the second container 212 installed at the second installation part 222.

According to the conventional operations described above, the transport mechanism 132 cannot get access to the first installation part 221 and the second installation part 222 (that is, cannot install a next container) until an operation that the nozzle 133 starts aspiration of a liquid and the liquid is discharged is completed (and until the nozzle 133 is evacuated to a position where the nozzle 133 does not collide with the transport mechanism 132). With such an operation, the restriction is imposed on an operation time chart of the automatic analyzer 100.

As one of factors that cause such restriction, it is considered that the transport mechanism 132 and the nozzle 133 do not simultaneously get access to the first installation part 221 or the second installation part 222. In addition to such a factor, conventional operation steps illustrated in Fig. 2 cause such restriction. In Embodiment 1, the present invention particularly focuses on a state that the transport mechanism 132 has to standby from a point of time that the nozzle 133 aspirates a liquid to a point of time that the nozzle 133 discharges the liquid.

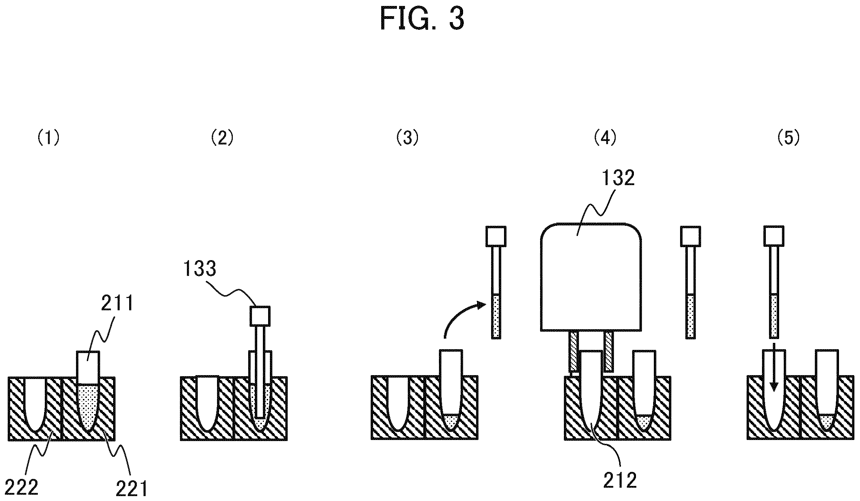

Fig. 3 is a view explaining operations of the transport mechanism 132 and the nozzle 133 according to Embodiment 1. In the same manner as Fig. 2, the description starts from a state where the first container 211 is already installed at the first installation part 221 (Fig. 3(1)).

The nozzle 133 accesses the first installation part 221 (moves to a position above the first installation part 221) before the transport mechanism 132 installs the second container 212 at the second installation part 222. The nozzle 133 accesses the first container 211 that the first installation part 221 holds (the nozzle 133 being introduced into the first container 211). The nozzle 133 aspirates a liquid that the first container 211 contains (Fig. 3(2)).

The nozzle 133 is evacuated to the position spaced apart from the first installation part 221 and the second installation part 222 (Fig. 3 (3)). As the nozzle 133 is evacuated, the transport mechanism 132 can access the first installation part 221 and the second installation part 222.

The transport mechanism 132 holds the second container 212 and accesses the second installation part 222 (moves to a position above the second installation part 222). The transport mechanism 132 installs the second container 212 at the second installation part 222 (Fig. 3 (4)).

Transport mechanism 132 is evacuated to the position spaced apart from the first installation part 221 and the second installation part 222. The nozzle 133 accesses the second installation part 222 (moves to the position above the second installation part 222). The nozzle 133 accesses the second container 212 that the second installation part 222 holds (introduces the nozzle 133 into the second container 212). The nozzle 133 discharges a liquid that is aspirated into the nozzle 133 to the second container 212 (Fig. 3(5)).

According to the operations in Embodiment 1 described heretofore, during a period from a point of time that the nozzle 133 aspirates a liquid to a point of time that nozzle 133 discharges the liquid, the operation where the transport mechanism 132 installs the second container 212 exists. Accordingly, compared to the operations illustrated in Fig .2, it is unnecessary for the transport mechanism 132 to standby from a point of time that the nozzle 133 aspirates a liquid to a point of time that the nozzle 133 discharges the liquid. That is, the restriction imposed on the operation time chart of the automatic analyzer 100 can be alleviated compared to the case illustrated in Fig. 2.

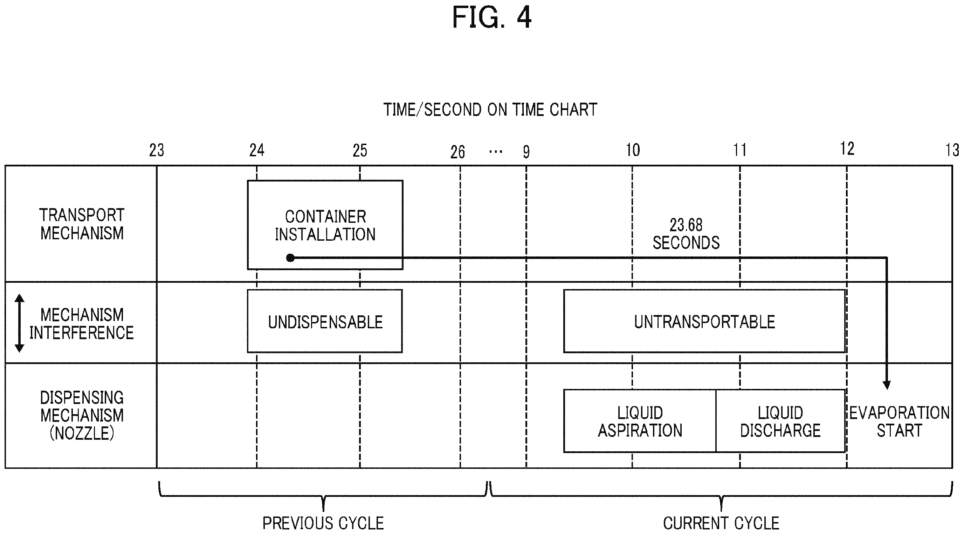

Fig. 4 is a time chart of conventional operations explained in Fig. 2. During a period that the transport mechanism 132 installs the second container 212 at the second installation part 222, the nozzle 133 can perform neither the aspiration of a liquid nor discharging of the liquid ("container installation" and "undispensable" in Fig. 4, the period corresponding to Fig. 2(2)). After the transport mechanism 132 is evacuated, the nozzle 133 aspirates a liquid from the first container 211, and discharges the liquid to the second container 212 ("liquid aspiration" and "liquid discharge" in Fig. 4, the period corresponding to Fig. 2(3), (4)). When the liquid discharge is completed and the nozzle 133 is evacuated, the transport mechanism 132 can transport the next container to either the first installation part 221 or the second installation part 222.

After the nozzle 133 discharges a liquid, the evaporation concentration mechanism 131 starts evaporation and concentration by reducing a pressure in the second container 212 ("evaporation start" in Fig. 4).

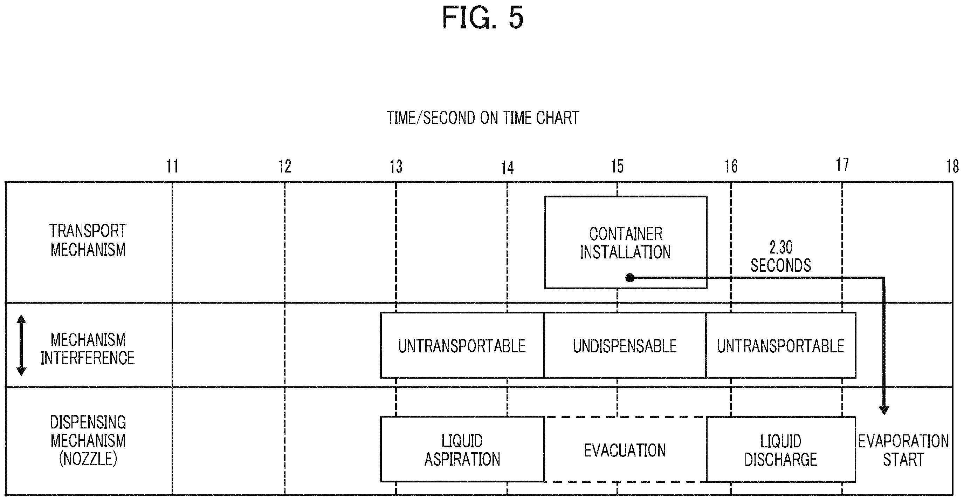

Fig. 5 is a time chart of operations according to Embodiment 1 explained in Fig. 3. After the nozzle 133 aspirates a liquid from the first container 211 ("liquid aspiration" in Fig. 5, a period corresponding to Fig. 3(2)), the nozzle 133 is evacuated to a position in the vicinity of a cleaning vessel, for example ("evacuation" in Fig. 5, a period corresponding to Fig. 3 (3)). During a period that the nozzle 133 is evacuated, the transport mechanism 132 installs the second container 212 ("container installation" in Fig. 5, a period corresponding to Fig. 3(4)). After the transport mechanism 132 is evacuated, the nozzle 133 discharges a liquid to the second container 212 ("liquid discharge" in Fig.5, a period corresponding to Fig. 3(5)).

After the nozzle 133 discharges a liquid, the evaporation concentration mechanism 131 starts evaporation and concentration by reducing a pressure in the second container 212 ("evaporation start" in Fig.5).

In Embodiment 1, the reason that the restriction imposed on the operation time chart is alleviated can be considered as follows. In Embodiment 1, during a period from a point of time that the nozzle 133 starts aspiration of a liquid in the first container 211 to a point of time that the nozzle 133 discharges the liquid to the second container 212, the operation that the transport mechanism 132 installs the second container 212 at the second installation part 222 exists. That is, a period during which the transport mechanism 132 is untransportable and the period during which the nozzle 133 is undispensable can be finely divided compared to the conventional operations. Accordingly, the operation non-allowable period and the operation allowable period can be arranged on the time chart more flexibly than the prior art and hence, the restriction imposed on the time chart can be more easily optimized than the prior art. The alleviation of the restriction according to Embodiment 1 is brought about by such a reason.

In general, by performing the aspiration of a liquid at a low speed, the aspiration exhibits the stable behavior. In the conventional operation, the longer a liquid aspiration time by the nozzle 133, the longer a time for evacuating the transport mechanism 132 becomes. Accordingly, the restriction imposed on the time chart is increased. With the use of Embodiment 1, the aspiration time can be prolonged without increasing the restriction imposed on the time chart of the transport mechanism 132.

In Embodiment 1, it is also considered to realize the operation steps substantially equal to the operation steps illustrated in Fig. 3 by using a mechanism that moves the first installation part 221 and the second installation part 222 (example: a mechanism substantially equal to the reaction vessel disc 120). In this case, however, the mechanism for moving the installation parts is liable to become large-sized and hence, the use of such a mechanism is not desirable from a viewpoint of a size and a cost of the device. Embodiment 1 is advantageous also from a viewpoint of the size of the device. In other words, the first installation unit 221 and the second installation unit 222 are disposed outside the reaction vessel disc 120, the container placed on the reaction vessel disc 120 is installed at the first installation part 221 or the second installation part 222, and the operations illustrated in Fig. 3 are performed or, alternately, the operations illustrated in Fig. 3 are performed on the first installation part 221 and the second installation part 222 and, thereafter, the container is moved with respect to the reaction vessel disc 120.

### Embodiment 1: Recapitulation

In the automatic analyzer 100 according to Embodiment 1, the transport mechanism 132 and the nozzle 133 are configured not to be able to simultaneously access the first installation part 221 or the second installation part 222. That is, after the nozzle 133 aspirates a liquid from the first container 211 and before the nozzle 133 discharges the liquid to the second container 212, the transport mechanism 132 installs the second container 212 at the second installation part 222. With such a configuration, although the transport mechanism 132 performs many operations for transporting the reaction vessel 116 between the plurality of mechanisms on the device so that the large restriction is imposed on the preparation of a time chart, a time interval necessary for evacuating the transport mechanism 132 from the position at which the transport mechanism 132 collides with the nozzle 133 can be shortened. That is, the restriction imposed on the operation time chart of the automatic analyzer 100 can be alleviated.

In the automatic analyzer 100 according to Embodiment 1, when the transport mechanism 132 accesses the first installation part 221 or the second installation part 222, the nozzle 133 is evacuated, and when the nozzle 133 accesses the first installation part 221 or the second installation part 222, the transport mechanism 132 is evacuated. Accordingly, it is possible to alleviate the restriction imposed on the operation time chart of the automatic analyzer 100 while avoiding the collision between the transport mechanism 132 and the nozzle 133.

In the automatic analyzer 100 according to Embodiment 1, a period from a point of time that the transport mechanism 132 installs the second container 212 to a point of time that the evaporation concentration mechanism 131 starts the evaporation and concentration can be shortened compared to a conventional operation. In a case where the evaporation concentration mechanism 131 is used for both heating and evaporation, when a long time elapses without advancing the step while leaving the second container 212 in an installed state on the evaporation concentration mechanism 131, the second container 212 is heated more than necessary. Embodiment 1 has an advantageous effect that such a heating time can be shortened.

### Embodiment 2

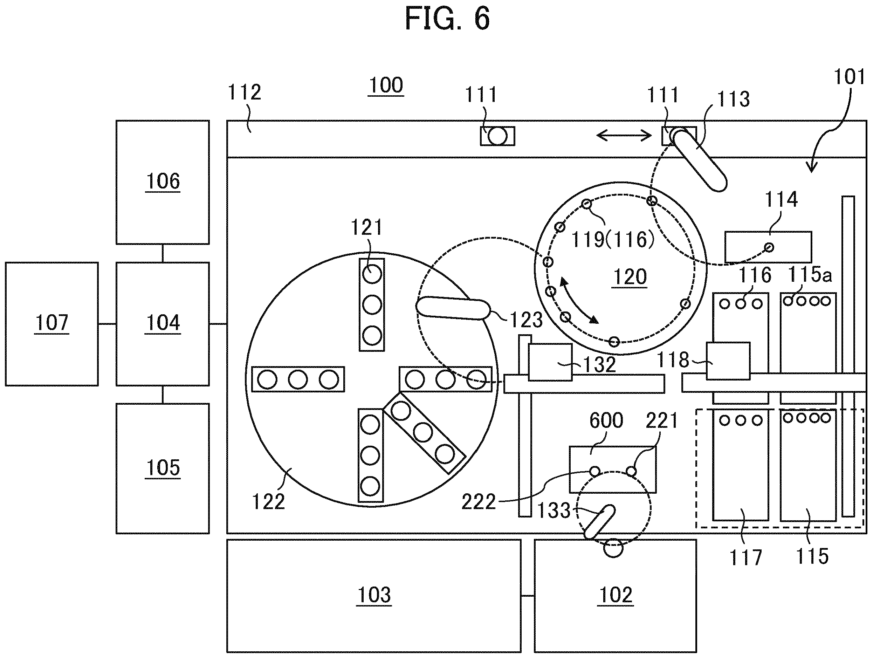

Fig. 6 is an overall configuration diagram of an automatic analyzer 100 according to Embodiment 2 of the present disclosure. In Embodiment 1, the example is described where the first installation part 221 and the second installation part 222 are formed as a part of the magnetic separation mechanism 124 or the evaporation concentration mechanism 131. Places where the first installation part 221 and the second installation part 222 are arranged are not limited to such places, and such places may be any other desired places where the respective containers for transferring a liquid by the nozzle between the first container 211 and the second container 212 are installed. For example, as a temporary installation position 600 where the container is temporarily installed for transferring a liquid, the first installation part 221 and the second installation part 222 can be used. The first installation part 221 and the second installation part 222 may be arranged at any other suitable places.

In the example illustrated in Fig. 6, the first installation part 221 and the second installation part 222 are provided at the temporary installation position 600. The temporary installation position 600 is an empty space for temporarily provisionally installing the container. For example, in a case where a liquid stored in the first container 211 is diluted, a small amount of liquid is transferred to the second container 212, and as a space for adding a diluting solution by a diluting solution discharge nozzle (not illustrated in the drawing), the temporary installation position 600 can be also used. An operation time chart with respect to the first installation part 221 and the second installation part 222 is equal to the corresponding operation time chart in Embodiment 1.

### Embodiment 3

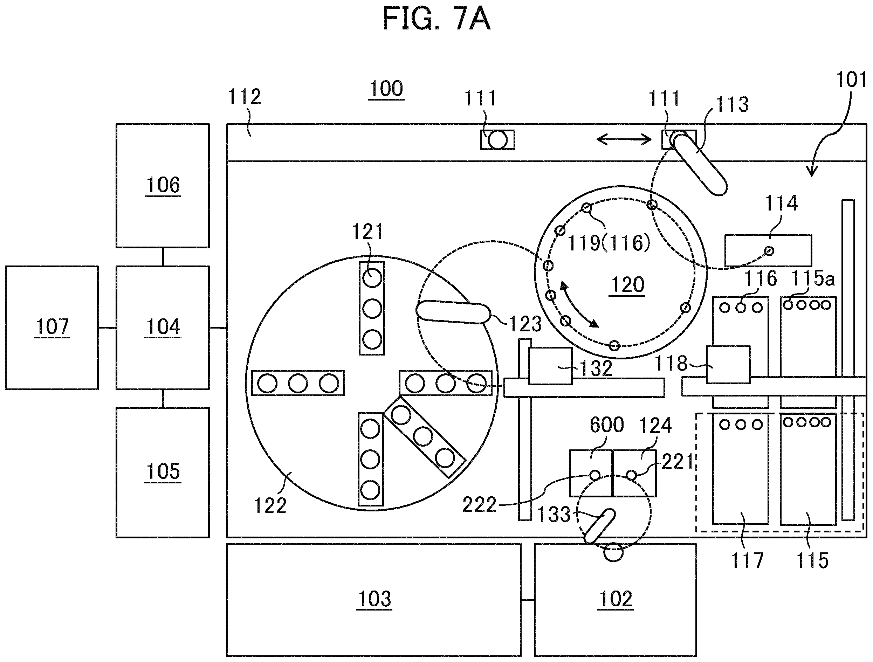

Fig. 7A is an overall configuration diagram of an automatic analyzer 100 according to Embodiment 3 of this disclosure. In Embodiment 1, the operation example in the case where a liquid is dispensed between the magnetic separation mechanism 124 and the evaporation concentration mechanism 131 is described. However, the places where the first installation part 221 and the second installation part 222 are arranged are not limited to such places. For example, as illustrated in Fig. 7A, the magnetic separation mechanism 124 has the first installation part 221, the temporary installation position 600 has the second installation part 222, and an operation substantially equal to the operation in Embodiment 1 may be performed between the first installation part 221 and the second installation part 222.

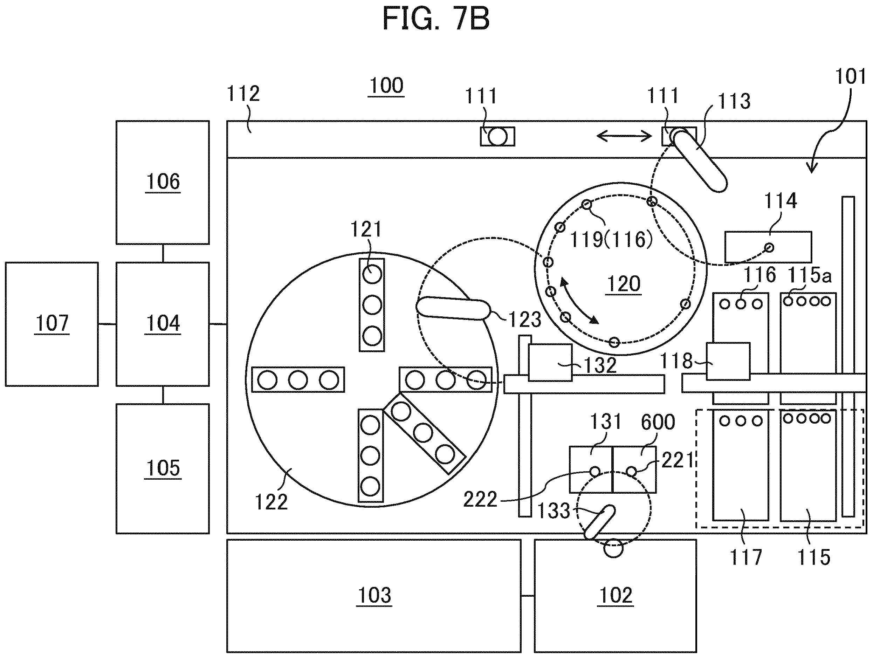

Fig. 7B is another configuration diagram of an automatic analyzer 100 according to Embodiment 3. As illustrated in Fig. 7B, the temporary installation position 600 has the first installation part 221, the evaporation concentration mechanism 131 has the second installation part 222, and an operation substantially equal to the operation in Embodiment 1 may be performed between the first installation part 221 and the second installation part 222.

### Modifications of this Disclosure

This disclosure is not limited to the above-mentioned Embodiments, and includes various modifications. For example, the above-mentioned Embodiments are described in detail for describing this disclosure in an easily understandable manner. However, it is not always necessary for this disclosure to include all constitutions. Further, a part of one Embodiment may be replaced with the configuration of another Embodiment. Further, the configuration of another Embodiment may be added to the configuration of one Embodiment. Further, with respect to a part of the configuration of each Embodiment, the addition, the deletion or the replacement of a part of the configuration of other Embodiment may be performed.

In Embodiment 1, the input part 105 and the display part 106 are illustrated as separate bodies. However, in place of such a configuration, for example, as in the case of a touch panel type monitor, the input part 105 and the display part 106 may be formed as an integral body.

In the above-mentioned Embodiments, the transport mechanism 132 may transport articles other than the first container 211 or the second container 212 during the "untransportable" period on the time chart. With such an operation, an operation efficiency of the transport mechanism 132 can be increased.

In the above-mentioned Embodiments, the reaction vessel 116 is exemplified as examples of the first container 211 and the second container 212 and, further the nozzle 133 is exemplified as the mechanism for dispensing a liquid to the first container 211 and the second container 212. It must be noted that the containers and the dispensing mechanism are not limited to these containers and dispensing mechanism, and a technique relating to this disclosure is applicable to other arbitrary containers and dispensing mechanism.

In the above-mentioned Embodiments, the description is made with respect to the case where the evaporation concentration mechanism 131 concentrates a liquid by reducing a pressure in the container. However, a technique for concentrating the liquid is not limited to such a case, and the liquid may be concentrated by any other suitable technique. It must be noted that, the technique according to this disclosure is also applicable to such a case.

In the above-mentioned Embodiment, the control unit 104 (controller) may be constituted of a hardware such as a circuit device to which functions of the control unit 104 are implemented. Alternatively, the control unit 104 may be constituted by allowing an arithmetic operation device (for example, central processing unit: CPU) to execute a software in which such functions are implemented.

It must be noted that, in the above-mentioned Embodiment, numerical examples illustrated in Fig. 4 and Fig. 5 are one example, and this disclosure is not limited by these numerical values.

### List of Reference Signs

100: automatic analyzer
104: control unit
124: magnetic separation mechanism
131: evaporation concentration mechanism
132: transport mechanism
133: nozzle
211: first container
212: second container
221: first installation part
222: second installation part

## Claims

1. A control method for controlling an automatic analyzer that analyzes a sample,
wherein:
the automatic analyzer has
a nozzle that aspirates or discharges a liquid,
a first installation part where a first container for storing the liquid is installed,
a second installation part where a second container for storing the liquid is installed, and
a transport mechanism for transporting the first container and the second container;
both the nozzle and the transport mechanism are accessible to each of the first container installed at the first installation part and the second container installed at the second installation part;
the first installation part and the second installation part are respectively placed at positions where the transport mechanism and the nozzle are in contact with each other when the nozzle accesses the first container installed at the first installation part while the transport mechanism accesses the second container installed at the second installation part; and
the control method includes the steps of:
aspirating the liquid by the nozzle from the first container installed at the first installation part;
installing the second container at the second installation part by the transport mechanism after the nozzle aspirates the liquid from the first container; and
discharging the liquid by the nozzle to the second container.

2. A control method according to Claim 1, further including a step of:
evacuating the transport mechanism from the second installation part before the nozzle discharges the liquid to the second container after the transport mechanism installs the second container at the second installation part, wherein
at the step of discharging the liquid, the nozzle is moved to a position where the nozzle can discharge the liquid to the second container by moving the nozzle to a space created at the step of evacuating the transport mechanism.

3. A control method according to Claim 1, further including a step of:
evacuating the nozzle from the first installation part before the transport mechanism installs the second container at the second installation part after the nozzle aspirates the liquid from the first container, wherein
at the step of installing the second container at the second installation part, the transport mechanism is moved to a position where the transport mechanism can install the second container at the second installation part after the transport mechanism and the nozzle are in the state of not being in contact with each other by evacuating the nozzle.

4. A control method according to Claim 3, wherein:
at the step of evacuating the nozzle from the first installation part, the nozzle is evacuated from the first installation part while the liquid aspirated from the first container by the nozzle is retained in the nozzle; and
at the step of discharging the liquid to the second container, the liquid retained in the nozzle is discharged to the second container.

5. A control method according to Claim 1, wherein:
the automatic analyzer further has a reaction disc over which a reaction vessel containing the sample is mounted when the sample is reacted;
the first installation part and the second installation part are placed outside the reaction disc; and
the control method further has a step of mounting the first container or the second container as the reaction vessel over the reaction disc, or moving the first container or the second container to the first installation part or the second installation part from the reaction disc, by moving the first container between the first installation part and the reaction disc or moving the second container between the second installation part and the reaction disc.

6. A control method according to Claim 1, wherein:
the automatic analyzer further has a magnetic separation device for separating magnetic particles contained in a liquid in a container;
the first installation part is configured as a place where the first container is installed for the magnetic separation device; and
the step of aspiration is applied to the first container installed in the magnetic separation device.

7. A control method according to Claim 1, wherein:
the automatic analyzer further has an evaporation concentration device for concentrating a liquid by evaporating the liquid stored in a container;
the second installation part is configured as a place where the second container is installed for the evaporation concentration device; and
the step of installing the second container and the step of discharge are applied to the second container installed in the evaporation concentration device.

8. A control method according to Claim 7, further including a step of:
evaporating and concentrating the liquid in the second container after the liquid is discharged to the second container.

9. An automatic analyzer for analyzing a sample, the automatic analyzer including a controller for controlling the automatic analyzer by implementing a control method according to Claim 1.
